# FASCICULE DE BREVET EUROPEEN

(11) **EP 3 937 049 B1**
(45) Date de publication et mention de la délivrance du brevet: **10.04.2024**
(21) Numéro de dépôt: 21184476.6
(22) Date de dépôt: 08.07.2021
(51) Int. Cl.: G06F 21/62, G06F 21/60, G06F 21/64

(54) **PROCÉDÉ DE LABELLISATION D'OBJETS DANS UN ENVIRONNEMENT DE TRAITEMENT DE GRANDS VOLUMES DE DONNÉES EN UTILISANT DES CODES BINAIRES ET SYSTÈME DE LABELLISATION ASSOCIÉ**
VERFAHREN ZUR KENNZEICHNUNG VON OBJEKTEN IN EINER DATENVERARBEITUNGSUMGEBUNG GROSSER VOLUMEN UNTER VERWENDUNG VON BINÄRCODES UND ENTSPRECHENDES KENNZEICHNUNGSYSTEM
METHOD FOR LABELLING OBJECTS IN AN ENVIRONMENT FOR PROCESSING LARGE VOLUMES OF DATA USING BINARY CODES AND ASSOCIATED LABELLING SYSTEM

(30) Priorité: 08.07.2020 FR 2007218
(43) Date de publication de la demande: 12.01.2022
(73) Titulaire: THALES, 92400 Courbevoie (FR)
(72) Inventeur: WIOREK, Jean-François, 78141 VELIZY CEDEX (FR)
(74) Mandataire: Lavoix

(56) Documents cités:
- US-A1- 2014 365 527
- "Information technology -- Security techniques -- Security information objects for access control", ISO/IEC 15816:2002, IEC, 3, RUE DE VAREMBÉ, PO BOX 131, CH-1211 GENEVA 20, SWITZERLAND, 31 janvier 2002 (2002-01-31), pages 1-21, XP082000809,
- ACEVEDO M T ET AL: "Enterprise security applications of partition rule based access control (PRBAC)", ENABLING TECHNOLOGIES: INFRASTRUCTURE FOR COLLABORATIVE ENTERPRISES, 1 997. PROCEEDINGS., SIXTH IEEE WORKSHOPS ON CAMBRIDGE, MA, USA 18-20 JUNE 1997, LOS ALAMITOS, CA, USA,IEEE COMPUT. SOC, US, 18 juin 1997 (1997-06-18), pages 285-292, XP010253336, DOI: 10.1109/ENABL.1997.630827 ISBN: 978-0-8186-7967-4

## Description

La présente invention concerne un procédé de labellisation d'objets dans un environnement de traitement de grands volumes de données en utilisant des codes binaires.

La présente invention concerne également un système de labellisation associé à ce procédé.

L'invention se situe dans le domaine technique des méthodes de traitement et de sécurisation de grands volumes de données. Ce type de données est connu plus couramment sous l'appellation anglaise de « Big Data » qui est également traduite dans certains cas par le terme « mégadonnées » ou « données massives ».

De manière générale, les données de type Big Data présentent des données dont le volume ne permet pas de les traiter de manière efficace par un être humain ni par toute autre méthode d'automatisation classique.

Ainsi, dans l'état de la technique, il existe de nombreuses méthodes de traitement conçues spécialement pour ce type de données.

Certaines de ces méthodes peuvent être réunies entre elles pour former un environnement particulier de traitement de données de type Big Data.

Autrement dit, par « environnement de traitement de grands volumes de données », on entend un ensemble de méthodes et d'outils de traitement de ces données réunis selon un certain critère. Un tel critère peut concerner par exemple la manière d'utilisation de ces méthodes et outils, l'interface d'interaction avec l'utilisateur, le domaine d'application, etc. Un exemple d'un tel environnement de traitement est l'environnement Hadoop.

Il va de soi que, pour être efficaces, les méthodes de traitement de données de type Big Data doivent pouvoir utiliser l'ensemble des données disponibles.

Toutefois, cette nécessité se heurte à des problèmes de sécurité lorsque les données présentent des sensibilités différentes.

En effet, selon les méthodes de l'état de la technique, on procède généralement à un cloisonnement de données de sensibilités différentes pour préserver leur confidentialité. Autrement dit, selon ces méthodes, des données de sensibilités différentes sont traitées de manière séparée.

On conçoit alors que le cloisonnement de données va à l'encontre des méthodes de traitement de données de type Big Data qui nécessitent au contraire la prise en compte d'un maximum de données.

"Information technology -- Security techniques -- Security information objects for access control", ISO/IEC 15816:2002, 31 janvier 2002, est un document ISO décrivant des principes d'autorisation d'accès à des objets en utilisant un fichier SPIF.

La présente invention a pour but de permettre le traitement de données de type Big Data en respectant leur confidentialité et cela sans cloisonnement séparant les données de sensibilités différentes. De plus, l'invention permet d'assurer une granularité très fine sur le contrôle d'accès aux données et cela de manière particulièrement rapide et efficace.

À cet effet, l'invention a pour objet un procédé de labellisation conforme à la revendication 1.

Suivant d'autres aspects avantageux de l'invention, le procédé de labellisation comprend une ou plusieurs des caractéristiques des revendications 2 à 10.

La présente invention a également pour objet un système de labellisation comprenant des moyens techniques adaptés pour mettre en oeuvre le procédé tel que défini ci-dessus.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un système de labellisation selon l'invention ; et
- [Fig 2] la figure 2 est un organigramme d'un procédé de labellisation selon l'invention, le procédé de labellisation étant mis en oeuvre par le système de labellisation de la figure 1.

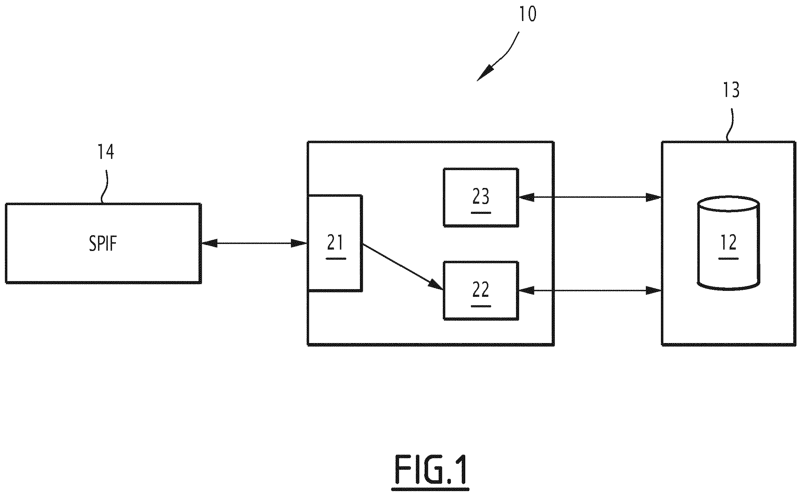

Le système de labellisation 10 de la figure 1 permet de labelliser des objets dans un environnement de traitement 13 de grands volumes de données selon une politique de labellisation.

Comme expliqué précédemment, l'environnement de traitement 13 de grands volumes de données présente un ensemble de méthodes et d'outils adaptés pour traiter les données de type Big Data désignées sur la figure 1 par la référence numérique 12. Un exemple d'un tel environnement est l'environnement Hadoop ou encore Bases Graphes.

Par « objet » dans un tel environnement de traitement, on entend une unité minimale sur laquelle le traitement est effectué. Cela peut être par exemple une information dans un fichier, un fichier, un groupe de fichiers ou toute autre entité élémentaire comme par exemple l'objet connu sous le terme « datastore » ou l'objet connu sous le terme « dataset ».

De manière connue en soi, l'environnement de traitement 13 de données de type Big Data définit un certain nombre d'éléments permettant de gérer l'accès aux objets par des utilisateurs.

Parmi ces éléments, il existe notamment des éléments appelés « attributs de données » pouvant être associés à chaque objet. Ainsi, chaque attribut de données définit des règles d'accès à l'objet auquel il est associé.

Il existe également des éléments appelés « attributs d'utilisateurs » permettant de définir des utilisateurs ayant des droits d'accès équivalents.

Il existe également des éléments appelés « règles d'accès » permettant d'associer à un attribut de données les conditions d'accès vis-à-vis des attributs d'utilisateurs.

En particulier, chaque règle d'accès peut comprendre le droit de lecture ou d'écriture ou d'exécution.

Comme indiqué précédemment, le système de labellisation 10 selon l'invention permet de labelliser les objets de l'environnement 13 selon une politique de labellisation.

En particulier, par « politique de labellisation », on entend un ensemble d'attributs de sécurité et de règles d'association de ces attributs.

Selon l'invention une telle politique de labellisation est décrite dans un fichier de type SPIF (de l'anglais « Security Policy Information File ») désigné sur la figure 1 par la référence numérique 14. Les fichiers de type SPIF imposent donc un format spécifique de description d'une politique de labellisation.

Selon ce format, chaque attribut SPIF présente un type choisi parmi le type classification, le type restrictif ou le type permissif. Dans certaines réalisations, un attribut SPIF peut présenter également un type mixte présentant des caractéristiques d'au moins deux types précités. Par exemple, un attribut de type mixte pour définir pour certaines valeurs un niveau hiérarchique comme cela est le cas des valeurs des attributs de type classification et pour certaines autres valeurs des conditions d'accès similaires à celles des attributs de type restrictif.

Les attributs SPIF de type classification, appelés également attributs SPIF de confidentialité, définissent un niveau hiérarchique entre eux.

En particulier, chaque attribut SPIF de type classification définit une valeur d'attribut correspondant au niveau hiérarchique de cet attribut qui permet d'accéder à chaque attribut SPIF de type classification d'un niveau hiérarchique inférieur ou égal à ce niveau hiérarchique.

Par exemple les attributs SPIF désignant le niveau d'habilitation d'un utilisateur, à savoir « NP » (non-protégé), « DR » (diffusion restreinte), « CD » (confidentiel défense), « SD » (secret défense) et « TS » (très secret défense), définissent chacune une valeur d'attribut choisie parmi les valeurs d'attribut « NP », « DR », « CD », « SD » et « TS ». Le niveau hiérarchique entre les attributs SPIF ayant des valeurs d'attribut différentes est choisi selon la règle suivante : NP<DR<CD<SD<TS.

Chaque attribut SPIF de type restrictif définit une liste de valeurs d'attribut et une condition d'accès avec une logique de « ET » entre les valeurs de cette liste.

Chaque attribut SPIF de type permissif définit une liste de valeurs d'attribut et une condition d'accès avec une logique de « OU » entre les valeurs de cette liste.

En référence à la figure 1, le système de labellisation 10 comprend un module d'entrée 21, un module de traitement 22 et un module de sécurisation 23.

Le module d'entrée 21 permet de recevoir le fichier de type SPIF 14 et de lire la politique de confidentialité décrite dans ce fichier 14.

Le module de traitement 22 permet d'interpréter la politique de confidentialité décrite dans le fichier 14 afin de la transposer sur l'environnement de traitement 13 des données 12. Autrement dit, le module de traitement 22 permet de labelliser les données 12 conformément à la politique de confidentialité décrite dans le fichier 14.

Le module de sécurisation 23 permet de sécuriser la labellisation effectuée par le module de traitement 22.

Les modules 21, 22, 23 se présentent par exemple au moins partiellement sous la forme des logiciels. Dans ce cas, ces logiciels sont mis en oeuvre notamment par au moins un processeur (non-représenté) du système 10 en utilisant par exemple une mémoire vive (non-représentée) de ce système 10.

Selon un autre exemple de réalisation, au moins un de ces modules 21, 22, 23 se présente au moins partiellement sous la forme d'un circuit logique programmable, tel que par exemple un circuit de type FPGA (de l'anglais « Field-Programmable Gate Array »).

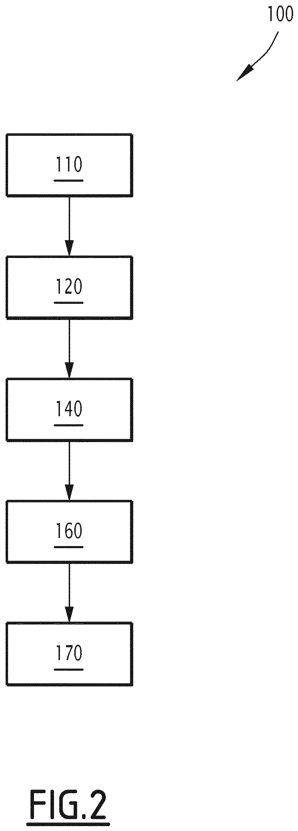

Le procédé de labellisation 100 mis en oeuvre par le système de labellisation 10 sera désormais expliqué en référence à la figure 2 présentant un organigramme de ses étapes.

Initialement, il est considéré que le fichier de type SPIF 14 décrivant une politique de labellisation est fourni. Le module d'entrée 21 reçoit alors ce fichier et en extrait l'ensemble des attributs SPIF ainsi que les règles d'association correspondante.

Lors d'une étape initiale 110 du procédé, le module de traitement 22 crée dans l'environnement de traitement 13 un attribut de données pour chaque attribut SPIF de chaque type dudit fichier 14.

Avantageusement, selon l'invention, chaque attribut de données présente un code binaire.

La valeur de ce code binaire est par exemple choisie en fonction du type d'attribut.

Par exemple, pour les attributs SPIF de type classification, les valeurs des codes binaires sont choisies en respectant le niveau hiérarchique de ces attributs SPIF .

En particulier, le code binaire de l'attribut de données associé à chaque attribut SPIF de type classification présente une valeur décimale strictement supérieure à la valeur décimale du code binaire de l'attribut de données associé à chaque attribut SPIF de type classification de niveau hiérarchique inférieur au niveau hiérarchique dudit attribut SPIF de type classification.

Par exemple, lorsqu'il s'agit des attributs SPIF de type classification ayant les valeurs d'attribut « NP », « DR », « CD », « SD » et « TS », les codes binaires suivants peuvent être associés aux attributs de données correspondants : 1, 10, 100, 1000, 10000. Les valeurs décimales de ces codes binaires sont respectivement : 1, 2, 4, 8, 16.

On conçoit alors qu'il est possible d'associer à chaque attribut de données un code binaire en commençant par « 1 » et en décalant à chaque fois à gauche le bit « 1 » et en ajoutant à droite le bit « 0 », suivant l'ordre hiérarchique des attributs SPIF correspondants.

Pour associer un code binaire à chaque attribut de données correspondant à un attribut SPIF de type restrictif ou de type permissif, il est possible d'associer d'abord un code binaire particulier à chaque valeur d'attribut de la liste de valeurs d'attribut définie par cet attribut.

Cette association est faite par exemple de sorte que la somme des codes binaires d'une combinaison quelconque de ces valeurs d'attribut forme un code binaire unique.

Dans tout ce qui suit, par l'expression de type « somme des codes binaires », on entend la valeur binaire de la valeur décimale correspondant à la somme des valeurs décimales de ces codes binaires.

Par exemple, lorsque des attributs SPIF de type restrictif ou de type permissif sont formés par des listes de valeurs d'attribut comprenant les valeurs d'attribut « A », « B », « C », « D », il est possible d'associer à ces valeurs d'attribut les codes binaires suivants : 1, 10, 100, 1000.

Ensuite, il est possible d'associer aux attributs de données correspondant aux attributs SPIF de type restrictif ou de type permissif des codes binaires de sorte que le code binaire de l'attribut de données associé à chaque attribut SPIF de type restrictif ou de type permissif soit une somme des codes binaires des valeurs d'attribut de la liste de valeurs d'attribut de cet attribut.

Par exemple, à l'attribut de données correspondant à l'attribut SPIF de type restrictif ou de type permissif formé par la liste de valeurs (A, B), le code binaire 11 est associé.

Selon un autre exemple, à l'attribut de données correspondant à l'attribut SPIF de type restrictif ou de type permissif formé par la liste de valeurs (B, C), le code binaire 110 est associé.

Selon encore un autre exemple, à l'attribut de données correspondant à l'attribut SPIF de type restrictif ou de type permissif formé par la liste de valeurs (C, D), le code binaire 1100 est associé.

Lors de l'étape 120, le module de traitement 22 crée dans l'environnement de traitement 13 un attribut d'utilisateurs pour chaque attribut SPIF de chaque type dudit fichier 14.

Selon l'invention, chaque attribut d'utilisateurs présente un code binaire déterminé en fonction des règles d'association de l'attribut SPIF correspondant et du code binaire d'au moins un attribut de données.

En particulier, pour les attributs d'utilisateurs correspondant aux attributs SPIF de type classification, le code binaire de l'attribut d'utilisateurs associé à chaque attribut SPIF de type classification présente une valeur décimale supérieure ou égale à la valeur décimale du code binaire de l'attribut de données associé à cet attribut SPIF de type classification et strictement inférieur au code binaire de l'attribut de données associé à chaque attribut SPIF de niveau hiérarchique strictement supérieur au niveau hiérarchique de cet attribut SPIF de type classification.

Dans le précédent exemple avec des attributs SPIF de type classification ayant les valeurs d'attribut « NP », « DR », « CD », « SD » et « TS », les codes binaires suivants peuvent être associés aux attributs d'utilisateurs correspondants : 1, 11, 111, 1111, 11111. Les valeurs décimales de ces codes binaires sont respectivement : 1, 3, 7, 15, 31.

On conçoit alors qu'il est possible d'associer à chaque attribut d'utilisateurs un code binaire en commençant par « 1 » et en décalant à chaque fois à gauche le bit « 1 » et en ajoutant à droite le bit « 1 », suivant l'ordre hiérarchique des attributs SPIF correspondants.

Les différents codes binaires associés aux attributs de données et aux attributs d'utilisateurs correspondant aux attributs SPIF de type classification peuvent alors être résumés dans le tableau suivant :

| Valeur d'attribut | Valeur décimale de l'attribut de données | Code binaire de l'attribut de données | Valeur décimale de l'attribut d'utilisateurs | Code binaire de l'attribut d'utilisateurs |
|---|---|---|---|---|
| NP | 1 | 1 | 1 | 1 |
| DR | 2 | 10 | 3 | 11 |
| CD | 4 | 100 | 7 | 111 |

| | | | | |
|---|---|---|---|---|
| SD | 8 | 1000 | 15 | 1111 |
| TS | 16 | 10000 | 31 | 11111 |

En ce qui concerne les attributs d'utilisateurs correspondant aux attributs SPIF de type restrictif ou permissif, le code binaire de l'attribut d'utilisateurs associé à chaque attribut SPIF de type restrictif ou de type permissif est choisi par exemple égal au code binaire de l'attribut de données associé au même attribut SPIF de type restrictif ou de type permissif.

Les différents codes binaires associés aux attributs de données et aux attributs d'utilisateurs correspondant aux attributs SPIF de type restrictif ou de type permissif peuvent alors être résumés dans le tableau suivant :

| Liste de valeurs d'attributs SPIF | Valeur décimale de l'attribut de données | Code binaire de l'attribut de données | Valeur décimale de l'attribut d'utilisateurs | Code binaire de l'attribut d'utilisateurs |
|---|---|---|---|---|
| A, B | 3 | 11 | 3 | 11 |
| B, C | 6 | 110 | 6 | 110 |
| C, D | 12 | 1100 | 12 | 1100 |

Lors de l'étape 140 suivante, le module de traitement 22 définit, pour chaque type d'attribut, une règle de validation définissant une autorisation d'accès d'au moins un attribut d'utilisateurs à un attribut de données par application d'au moins un opérateur logique aux codes binaires correspondants, conformément aux règles d'association correspondantes.

Ainsi, par exemple, pour les attributs SPIF de type classification, la règle de validation définie pour les attributs SPIF de type classification comprend l'application de l'opérateur logique « ET » entre les codes binaires d'un attribut d'utilisateurs et d'un attribut de données ou la comparaison des valeurs décimales de ces codes binaires en utilisant l'opérateur logique « ≥ ».

Dans le précédent exemple avec des attributs SPIF de type classification ayant les valeurs d'attribut « NP », « DR », « CD », « SD » et « TS », l'attribut d'utilisateurs « TS » a le code binaire 11111 dont la valeur décimale est 31. Cette valeur est la plus élevée parmi toutes les autres valeurs des codes binaires de l'ensemble des attributs de données.

Dans ce cas, l'application de l'opérateur « ≥ » d'un coté à la valeur décimale de ce code binaire et de l'autre, à la valeur décimale du code binaire d'un attribut de données quelconque donne le résultat « vrai ».

Il est possible d'obtenir le même résultat en appliquant l'opérateur « ET » entre le code binaire de l'attribut d'utilisateurs « TS » et le code binaire d'un attribut de données quelconque.

Cela signifie alors que l'attribut d'utilisateurs « TS » a une autorisation d'accès en relation avec l'ensemble des attributs de données « NP », « DR », « CD », « SD » et « TS ».

En ce qui concerne les attributs SPIF de type restrictif, la règle de validation définie pour ce type d'attribut comprend l'application de l'opérateur logique « ET » entre les codes binaires d'un attribut d'utilisateurs et d'un attribut de données ou la comparaison de ces codes binaires en utilisant l'opérateur logique « _ ».

Autrement dit, dans ce cas, un attribut d'utilisateurs a une autorisation d'accès à un attribut de données seulement si les codes binaires de cet attribut d'utilisateurs et de cet attribut de données sont identiques.

Enfin, en ce qui concerne les attributs SPIF de type permissif, la règle de validation définie pour les attributs SPIF de type permissif comprend l'application de l'opérateur logique « XOR » entre les codes binaires d'un attribut d'utilisateurs.

Ainsi, dans le précédent exemple avec les attributs SPIF de type permissif définis par les listes de valeurs d'attribut (A, B), (B, C) et (C,D), l'attribut d'utilisateurs correspondant à l'attribut SPIF (A,B) a une autorisation d'accès à l'attribut de données correspondant au même attribut SPIF (A, B) ainsi qu'à l'attribut de données correspondant à l'attribut SPIF (B,C) car le résultat d'application de l'opérateur « XOR » aux codes binaires correspondants est « vrai ». En revanche, cet attribut d'utilisateurs n'a pas d'autorisation d'accès à l'attribut de données correspondant à l'attribut SPIF (C, D) car le résultat d'application de l'opérateur « XOR » aux codes binaires correspondants est « faux ».

L'homme du métier comprendra que les étapes 110, 120 et 140 telles que décrites ci-dessus peuvent également être appliquées aux attributs SPIF de type mixte, c'est-à-dire aux attributs SPIF présentant des caractéristiques de plusieurs types précités. Dans ce cas, le choix des codes binaires pour chaque attribut de données et chaque attribut d'utilisateurs correspondant à un attribut SPIF de type mixte est effectué en fonction de la structure de cet attribut de type mixte. Il est de même en ce qui concerne les règles de validation choisies pour ce type d'attribut qui peuvent dans ce cas être par exemple composés de plusieurs opérateurs logiques.

Lors de l'étape 160 suivante, le module de traitement 22 associe à chaque objet dudit environnement de traitement 13 au moins un attribut de données.

En particulier, plusieurs attributs de données peuvent être associés à au moins certains des objets.

Lors de l'étape 170 suivante, le module de sécurisation 23 sécurise les associations des attributs de données à des objets, par exemple par application d'un mécanisme de signature électronique.

En particulier, l'application du mécanisme de signature électronique à chaque association d'un ou de plusieurs attributs de données à un objet comprend :
- génération d'un code hash à partir d'un identifiant unique de l'objet et de l'ensemble des attributs de données lui associés ;
- signature du code hash avec un algorithme cryptographique à base de clés asymétriques et/ou symétriques.

En complément, le même mécanisme de sécurisation est également appliqué à la politique de labellisation.

On conçoit alors que la présente invention présente un certain nombre d'avantages.

Tout d'abord, l'invention permet de mettre en oeuvre une politique de labellisation décrite dans un fichier SPIF dans un environnement de traitement de données de type Big Data.

La labellisation ainsi créée permet d'obtenir un contrôle fin d'accès à des données de sensibilités différentes et cela sans créer des cloisonnements de ces données. Ainsi, l'ensemble de ces données peuvent être traitées par des méthodes habituelles de traitement de données de type Big Data sans restriction sur un type particulier de données.

De plus, l'utilisation des codes binaires pour vérifier les règles de validation permet de traiter les différentes demandes d'accès de manière particulièrement rapide et efficace.

Enfin, l'invention permet de sécuriser l'ensemble des associations et des règles d'accès créées. Cette sécurisation est faite pat l'ajout des signatures électroniques dont l'authenticité peut être vérifiée lorsqu'il est nécessaire d'obtenir l'accès à l'objet correspondant.

## Revendications

1. Procédé de labellisation (100) d'objets dans un environnement de traitement (13) de grands volumes de données selon une politique de labellisation décrite dans un fichier de type SPIF (14), ladite politique de labellisation définissant une pluralité d'attributs SPIF attribuables à des objets et des règles d'association de ces attributs, chaque attribut SPIF étant d'un type prédéterminé ;
le procédé (100) comprenant les étapes suivantes :
- création (110) dans ledit environnement de traitement (13) d'un attribut de données pour chaque attribut SPIF dudit fichier de type SPIF (14), chaque attribut de données présentant un code binaire ;
- création (120) dans ledit environnement de traitement (13) d'un attribut d'utilisateurs pour chaque attribut SPIF dudit fichier de type SPIF (14), chaque attribut d'utilisateurs présentant un code binaire déterminé en fonction des règles d'association de l'attribut SPIF correspondant et du code binaire d'au moins un attribut de données ;
- pour chaque type d'attribut, définition (140) d'une règle de validation définissant une autorisation d'accès d'au moins un attribut d'utilisateurs à un attribut de données par application d'au moins un opérateur logique aux codes binaires correspondants, conformément aux règles d'association correspondantes ;
- association (160) à chaque objet dudit environnement de traitement (13) d'au moins un attribut de données.

2. Procédé (100) selon la revendication 1, dans lequel au moins certains des attributs SPIF sont de type classification, chaque attribut SPIF de type classification définissant une valeur d'attribut déterminant un niveau hiérarchique de cet attribut SPIF par rapport aux autres attributs SPIF de type classification ;
le code binaire de l'attribut de données associé à chaque attribut SPIF de type classification étant de valeur décimale strictement supérieure à la valeur décimale du code binaire de l'attribut de données associé à chaque attribut SPIF de type classification de niveau hiérarchique inférieur au niveau hiérarchique dudit attribut SPIF de type classification.

3. Procédé (100) selon la revendication 2, dans lequel le code binaire de l'attribut d'utilisateurs associé à chaque attribut SPIF de type classification étant de valeur décimale supérieure ou égale à la valeur décimale du code binaire de l'attribut de données associé à cet attribut SPIF de type classification et strictement inférieur au code binaire de l'attribut de données associé à chaque attribut SPIF de niveau hiérarchique strictement supérieur au niveau hiérarchique de cet attribut SPIF de type classification.

4. Procédé (100) selon la revendication 3, dans lequel la règle de validation définie pour les attributs SPIF de type classification comprend l'application de l'opérateur logique « ET » entre les codes binaires d'un attribut d'utilisateurs et d'un attribut de données ou la comparaison des valeurs décimales de ces codes binaires en utilisant l'opérateur logique « ≥ ».

5. Procédé (100) selon l'une quelconque des revendications précédentes, dans lequel au moins certains des attributs SPIF sont de type restrictif ou de type permissif ;
chaque attribut SPIF de type restrictif définissant une liste de valeurs d'attribut et une condition d'accès avec une logique de « ET » entre les valeurs d'attribut de cette liste ;
chaque attribut SPIF de type permissif définissant une liste de valeurs d'attribut et une condition d'accès avec une logique de « OU » entre les valeurs d'attribut de cette liste ;
le code binaire de l'attribut de données associé à chaque attribut SPIF de type restrictif ou de type permissif étant une somme de codes binaires associés aux valeurs d'attributs de la liste de valeurs d'attribut de cet attribut.

6. Procédé (100) selon la revendication 5, dans lequel le code binaire de l'attribut d'utilisateurs associé à chaque attribut SPIF de type restrictif ou de type permissif est égal au code binaire de l'attribut de données associé au même attribut SPIF de type restrictif ou de type permissif.

7. Procédé (100) selon la revendication 6, dans lequel la règle de validation définie pour les attributs SPIF de type restrictif comprend l'application de l'opérateur logique « ET » entre les codes binaires d'un attribut d'utilisateurs et d'un attribut de données ou la comparaison de ces codes binaires en utilisant l'opérateur logique « _ ».

8. Procédé (100) selon la revendication 6 ou 7, dans lequel la règle de validation définie pour les attributs SPIF de type permissif comprend l'application de l'opérateur logique « XOR » entre les codes binaires d'un attribut d'utilisateurs.

9. Procédé (100) selon l'une quelconque des revendications précédentes, comprenant en outre une étape de sécurisation (170) des associations des attributs de données à des objets, par application d'un mécanisme de signature électronique.

10. Procédé (100) selon la revendication 9, dans lequel l'application du mécanisme de signature électronique à chaque association d'un ou de plusieurs attributs de données à un objet comprend :
- génération d'un code hash à partir d'un identifiant unique de l'objet et de l'ensemble des attributs de données lui associés ;
- signature du code hash avec un algorithme cryptographique à base de clés asymétriques et/ou symétriques.

11. Système de labellisation (10) comprenant des moyens techniques (21, 22, 23) adaptés pour mettre en oeuvre le procédé (100) selon l'une quelconque des revendications 1 à 10.

## Patentansprüche

1. Verfahren zur Kennzeichnung (100) von Objekten in einer Verarbeitungsumgebung (13) großer Datenmengen gemäß einer Kennzeichnungspolitik, die in einer Datei vom Typ SPIF (14) beschrieben ist, wobei die Kennzeichnungspolitik eine Vielzahl von SPIF-Attributen definiert, die Objekten zuordenbar sind, und Regeln für die Zuordnung dieser Attribute, wobei jedes SPIF-Attribut von einem vorbestimmten Typ ist;
wobei das Verfahren (100) die folgenden Schritte umfasst:
- Erzeugen (110) in der Verarbeitungsumgebung (13) eines Datenattributs für jedes SPIF-Attribut der Datei vom SPIF-Typ (14), wobei jedes Datenattribut einen Binärcode aufweist;
- Erzeugen (120) in der Verarbeitungsumgebung (13) eines Benutzerattributs für jedes SPIF-Attribut der Datei vom SPIF-Typ (14), wobei jedes Benutzerattribut einen Binärcode aufweist, der in Abhängigkeit von den Zuordnungsregeln des entsprechenden SPIF-Attributs und des Binärcodes von mindestens einem Datenattribut bestimmt wird;
- für jeden Attributtyp, Definieren (140) einer Validierungsregel, die eine Zugriffsberechtigung von mindestens einem Benutzerattribut auf ein Datenattribut definiert, durch Anwendung von mindestens einem logischen Operator auf die entsprechenden Binärcodes, gemäß den entsprechenden Zuordnungsregeln;
- Zuordnen (160) zu jedem Objekt der Verarbeitungsumgebung (13) von mindestens einem Datenattribut.

2. Verfahren (100) nach Anspruch 1, wobei mindestens einige der SPIF-Attribute vom Klassifizierungstyp sind, wobei jedes SPIF-Attribut vom Klassifizierungstyp einen Attributwert definiert, der eine hierarchische Ebene dieses SPIF-Attributs in Bezug auf die anderen SPIF-Attribute vom Klassifizierungstyp bestimmt;
wobei der Binärcode des Datenattributs, das jedem SPIF-Attribut vom Klassifizierungstyp zugeordnet ist, einen Dezimalwert hat, der strikt größer ist als der Dezimalwert des Datenattributs, das jedem SPIF-Attribut vom Klassifizierungstyp zugeordnet ist, dessen hierarchische Ebene niedriger ist als die hierarchische Ebene des SPIF-Attributs vom Klassifizierungstyp.

3. Verfahren (100) nach Anspruch 2, wobei der Binärcode des Benutzerattributs, das jedem SPIF-Attribut vom Klassifizierungstyp zugeordnet ist, einen Dezimalwert hat, der größer oder gleich dem Dezimalwert des Binärcodes des Datenattributs ist, das diesem SPIF-Attribut vom Klassifizierungstyp zugeordnet ist und strikt kleiner als der Binärcode des Datenattributs, das jedem SPIF-Attribut zugeordnet ist, dessen hierarchische Ebene strikt höher ist als die hierarchische Ebene dieses SPIF-Attributs vom Klassifizierungstyp.

4. Verfahren (100) nach Anspruch 3, wobei die für SPIF-Attribute vom Klassifizierungstyp definierte Validierungsregel die Anwendung des logischen Operators "UND" zwischen den Binärcodes eines Benutzerattributs und eines Datenattributs oder den Vergleich der Dezimalwerte dieser Binärcodes unter Verwendung des logischen Operators "≥" umfasst.

5. Verfahren (100) nach einem der vorhergehenden Ansprüche, wobei mindestens einige der SPIF-Attribute vom restriktiven Typ oder vom permissiven Typ sind;
wobei jedes SPIF-Attribut vom restriktiven Typ eine Liste von Attributwerten und eine Zugriffsbedingung mit einer "UND"-Logik zwischen den Attributwerten in dieser Liste definiert;
wobei jedes SPIF-Attribut vom permissiven Typ eine Liste von Attributwerten und eine Zugriffsbedingung mit einer "ODER"-Logik zwischen den Attributwerten in dieser Liste definiert;
wobei der Binärcode des Datenattributs, das jedem SPIF-Attribut vom restriktiven Typ oder vom permissiven Typ zugeordnet ist, eine Summe von Binärcodes ist, die den Attributwerten in der Liste der Attributwerte für dieses Attribut zugeordnet sind.

6. Verfahren (100) nach Anspruch 5, wobei der Binärcode des Benutzerattributs, das jedem SPIF-Attribut vom restriktiven Typ oder vom permissiven Typ zugeordnet ist, gleich dem Binärcode des Datenattributs ist, das demselben SPIF-Attribut vom restriktiven Typ oder vom permissiven Typs zugeordnet ist.

7. Verfahren (100) nach Anspruch 6, wobei die für SPIF-Attribute vom Klassifizierungstyp definierte Validierungsregel die Anwendung des logischen Operators "UND" zwischen den Binärcodes eines Benutzerattributs und eines Datenattributs oder den Vergleich dieser Binärcodes unter Verwendung des logischen Operators "=" umfasst.

8. Verfahren (100) nach Anspruch 6 oder 7, wobei die für SPIF-Attribute vom permissiven Typ definierte Validierungsregel die Anwendung des logischen Operators "XOR" zwischen den Binärcodes eines Benutzerattributs umfasst.

9. Verfahren (100) nach einem der vorhergehenden Ansprüche, das ferner einen Sicherungsschritt (170) der Zuordnungen er Datenattribute zu Objekten durch Anwendung eines elektronischen Signaturmechanismus umfasst.

10. Verfahren (100) nach Anspruch 9, wobei die Anwendung des elektronischen Signaturmechanismus auf jede Zuordnung von einem oder mehreren Datenattributen zu einem Objekt umfasst:
- Generieren eines Hash-Codes aus einer eindeutigen Kennung des Objekts und allen ihm zugeordneten Datenattributen;
- Signieren des Hash-Codes mit einem kryptografischen Algorithmus auf der Grundlage von asymmetrischen und/oder symmetrischen Schlüsseln.

11. Kennzeichnungssystem (10) , das technische Mittel (21, 22, 23) umfasst, die zur Durchführung des Verfahrens (100) nach einem der Ansprüche 1 bis 10 geeignet sind.

## Claims

1. A method of labelling (100) objects in an environment (13) for processing large volumes of data in accordance with a labelling policy described in a SPIF-type file (14), said labelling policy defining a number of SPIF attributes attributable to objects and rules for associating these attributes, each SPIF attribute being of a predetermined type;
the method (100) comprising the following steps:
- creation (110) in said processing environment (13) of a data attribute for each SPIF attribute of said SPIF type file (14), each data attribute having a binary code ;
- creation (120) in said processing environment (13) of a user attribute for each SPIF attribute of said SPIF type file (14), each user attribute having a binary code determined as a function of the association rules of the corresponding SPIF attribute and of the binary code of at least one data attribute;
- for each type of attribute, definition (140) of a validation rule defining an access authorisation for at least one user attribute to a data attribute by applying at least one logical operator to the corresponding binary codes, in accordance with the corresponding association rules;
- association (160) with each object of said processing environment (13) of at least one data attribute.

2. A method (100) according to claim 1, wherein at least some of the SPIF attributes are of the classification type, each SPIF attribute of the classification type defining an attribute value determining a hierarchical level of that SPIF attribute relative to the other SPIF attributes of the classification type;
the binary code of the data attribute associated with each classification-type SPIF attribute having a decimal value strictly greater than the decimal value of the binary code of the data attribute associated with each classification-type SPIF attribute of a hierarchical level lower than the hierarchical level of said classification-type SPIF attribute.

3. A method (100) according to claim 2, in which the binary code of the user attribute associated with each classification type SPIF attribute has a decimal value greater than or equal to the decimal value of the binary code of the data attribute associated with this classification type SPIF attribute and is strictly less than the binary code of the data attribute associated with each SPIF attribute of hierarchical level strictly higher than the hierarchical level of this classification type SPIF attribute.

4. A method (100) according to claim 3, wherein the validation rule defined for classification type SPIF attributes comprises applying the logical operator "AND" between the binary codes of a user attribute and a data attribute or comparing the decimal values of these binary codes using the logical operator "≥".

5. A method (100) according to any one of the preceding claims, in which at least some of the SPIF attributes are of the restrictive type or of the permissive type;
each restrictive-type SPIF attribute defining a list of values and an access condition with an "AND" logic between the attribute values of this list;
Each permissive-type SPIF attribute defining a list of attribute values and an access condition with an "OR" logic between the attribute values of this list.
the binary code of the data attribute associated with each restrictive-type or permissive-type SPIF attribute being a sum of the binary codes associated with the attribute values of the list of attribute values for that attribute.

6. A method (100) according to claim 5, wherein the binary code of the user attribute associated with each restrictive-type or permissive-type SPIF attribute is equal to the binary code of the data attribute associated with the same restrictive-type or permissive-type SPIF attribute.

7. A method (100) according to claim 6, wherein the validation rule defined for restrictive type SPIF attributes comprises applying the logical operator "AND" between the binary codes of a user attribute and a data attribute or comparing these binary codes using the logical operator "_".

8. A method (100) according to claim 6 or 7, wherein the validation rule defined for permissive type SPIF attributes comprises applying the logical operator "XOR" between the binary codes of a user attribute.

9. A method (100) according to any of the preceding claims, further comprising a step (170) of securing the associations of data attributes with objects, by applying an electronic signature mechanism.

10. A method (100) according to claim 9, wherein applying the electronic signature mechanism to each association of one or more data attributes to an object comprises:
- generating a hash code from a unique object identifier and all associated data attributes;
- signing of the hash code using a cryptographic algorithm based on asymmetric and/or symmetric keys.

11. A labelling system (10) comprising technical means (21, 22, 23) adapted to implement the method (100) according to any one of claims 1 to 10.
